# EUROPEAN PATENT APPLICATION

(11) **EP 1 261 170 A1**
(43) Date of publication of application: **27.11.2002**
(21) Application number: 01304591.9
(22) Date of filing: 24.05.2001
(51) Int. Cl.: H04L 12/28, H04L 29/06

(54) **Method for providing network access to a mobile terminal and corresponding network**

(71) Applicant: BRITISH TELECOMMUNICATIONS public limited company, London EC1A 7AJ (GB)
(72) Inventor: The designation of the inventor has not yet been filed
(74) Representative: Robinson, Simon Benjamin

(57) **Abstract**

A method for providing access to a network (40) from a mobile terminal (10) (for example a mobile telephone) in which the terminal (10) passes unique identifiers to an authentication server (50). If the identifiers match a database entry then a network address is sent to a service node (70): the mobile terminal (10) then initiates a communication session using the network address sent to the service node (70) and using the service node (70) as a proxy server.

## Description

The invention relates to a method for allowing access to a private network from a mobile terminal, and in particular a mobile telephone.

Mobile telephones have become ubiquitous in Europe and North America, and in developing nations network operators are deploying mobile networks rather than fixed access networks. Mobile telephones have been a significant driver in the move from industrialised societies to information-based societies and this will gain momentum as users are able to access the internet as well as making voice calls. Currently, large companies and organisations have large intranets and systems (such as email) to which access is controlled to authorised users using security mechanisms such as SecurlD cards. Secure access to intranets and similar systems will be required for authorised users having data-capable mobile telephones (or personal digital assistants with data communications capabilities) without the inconvenience associated with issuing and managing security tokens.

According to a first aspect of the current invention there is provided a method of providing network access to a mobile terminal, the method comprising the steps of;
(a) receiving one or more terminal unique identifiers from the mobile terminal at an authentication server,
(b) searching a terminal unique identifier database held by the authentication server for the received terminal identifiers;
(c) transmitting a network address to a service node if the search performed in step (b) indicates a match; and
(d) providing access from the mobile terminal to a network via the service node using the network address transmitted to the service node.

It is preferred that the terminal unique identifiers are received at the authentication server from the mobile terminal via the service node. The service node may communicate with the mobile terminal via a WAP gateway and the terminal may be a mobile telephone. The one or more terminal unique identifiers received by the authentication server may be unique to the mobile terminal data carrier, for example the subscriber identity module (SIM) card held by the terminal. Preferably the one or more unique terminal identifiers received by the authentication server are unique to the terminal hardware.

The network address transmitted to the service node may be associated with the one or more terminal identifiers sent to the authentication server or alternatively the network address transmitted to the service node may be chosen from a defined range of network addresses.

According to a second aspect of the present invention there is provided a communications network comprising an authentication server and a service node, the authentication server configured, in use, to
(i) receive data from a mobile terminal, said data comprising terminal-unique identifiers;
(ii) search a database of terminal unique identifiers; and
(iii) cause a network address to be transmitted to a service node if the search performed in (iii) indicates a match, the service node, in use, establishing a communication session between said mobile terminal and a further communications network via the service node using the network address transmitted to the service node. The authentication server may be in communication with the service node such that, in use, the terminal unique identifiers are communicated to the authentication server from the mobile terminal via the service node. Furthermore the network may further comprise a WAP gateway which is in communication with the service node such that, in use, the mobile terminal communicates with the service node via the gateway.

The invention will now be described, by way of example only, with reference to the following figures in which
Figure 1 shows a schematic view of a known arrangement that allows users of mobile telephones to access the internet.
Figure 2 shows a schematic depiction of a first embodiment of the present invention; and
Figure 3 shows a schematic depiction of a second embodiment of the present invention.

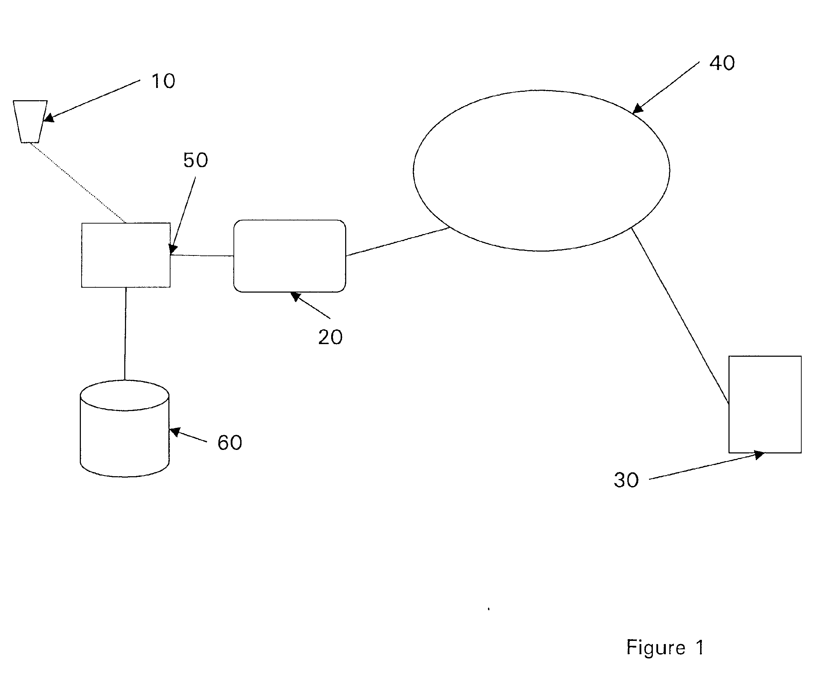

Figure 1 shows a schematic view of a network arrangement that allows users of suitably equipped mobile telephones to access a network that uses the internetworking protocol suite (for example an intranet or an internet). Each mobile terminal 10 may establish a connection with gateway 20 for onward connection to a server 30 that is connected to the network 40. Access to the network 40, via the gateway, is controlled by a Remote Authentication Dial-in User Server (RADIUS) 50. When a mobile terminal attempts to contact the gateway the terminal passes a user identifier and an associated password to the RADIUS using the Challenge Handshake Authentication Protocol (CHAP). If the identifier and the password match a user record in the RADIUS database then the communication session is established. Typically, the mobile terminal holds the user identifier and the password in nonvolatile memory and presents them to the RADIUS to authenticate the user.

When the terminal user selects the address of a server, or of a file held on a server, by pressing a button on the terminal, the terminal transmits the URL for the selected server or file to the gateway 20. Because the mobile terminal does not have the hardware and processing capabilities of a personal computer it is not able to run an internet browser such as Microsoft Internet Explorer or Netscape Navigator but instead the terminal runs a microbrowser such as OpenWave Mobile Browser or the Nokia WAP browser. These microbrowsers can use WML (Wireless Mark-up Language) and HTML (Hyper Test Mark-up Language). Rather than communicate with the gateway using the conventional internetworking protocols, the terminal uses a group of protocols which are referred to as the Wireless Application Protocol (WAP) (see The Essential Guide to Wireless Communications Applications, A Dornan, published by Prentice Hall, pages 137-143 for an overview of the WAP protocol stack). WAP enables mobile terminals, such as mobile telephones, to access suitably configured world wide web pages.

The mobile terminal sends the server (or file) request to the WAP gateway which receives the request and then translates it into a conventional HTTP request for the URL (uniform request locator) specified in the request. The HTTP request is forwarded to the associated server which then returns WML formatted content to the gateway along with an HTTP header [this content may be stored on the server in a WML file or alternatively a script may be run to generate WML-formatted content from HTML-formatted content (or another alternative format)]. The gateway receives the WML-formatted data, strips off the HTTP header and adds a WML header in order to send the data to the mobile terminal. This data is received by the mobile terminal which parses the WML code using the microbrowser and then displays the received contents on the terminal's display screen. When the gateway translates the requests that are sent through it, it removes the originating IP address from the requests and thus the gateway inserts its own IP address into the data packets that it transmits. This means that the server does not receive the IP address of the terminal and that the terminal does not receive the IP address of the server (thus it can be seen that the gateway is acting as a proxy server in this regard).

The WAP protocol stack is bearer independent and thus it is possible for a mobile terminal to use a wide range of level 2 technologies to support WAP communication sessions. For second generation mobile telephone technologies, such as GSM and D-AMPS it will be necessary for the mobile terminal to connect to a network access server 60 in order to be able to connect to the gateway. For more advanced technologies, such as GPRS and UMTS, the mobile terminal will use the IP address of the WAP gateway when initiating a session.

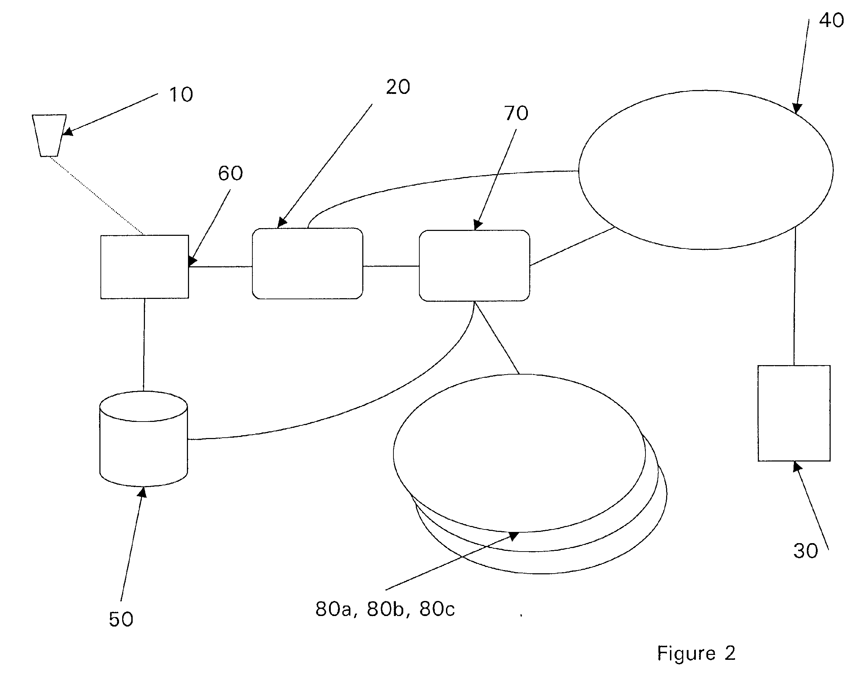

Figure 2 shows a schematic depiction of a network which incorporates a first embodiment of the present invention. As before, mobile telephone 10 connects to network access server (NAS) 60, for example by dialling a telephone number associated with the NAS. The NAS initiates CHAP communications with the RADIUS 50, causing the username data and password held on the phone to be transmitted to the RADIUS. If this matches with the data held on the RADIUS then the NAS assigns an IP address to the mobile telephone.

The mobile telephone then initiates a communication session with the WAP gateway 20 using the WAP protocol stack. Whilst doing so, the mobile telephone communicates one or more unique identifiers to the WAP gateway. These identifiers are unique to the mobile telephone (for example, the IMEI [International Mobile station Equipment Identity]) or to the SIM card that is held by the mobile telephone (for example the IMSI [International Mobile Subscriber Identity] or the MSISDN [Mobile Station ISDN]).

The WAP gateway allows the unique identifier(s) to pass to a service node 70, which in turn passes one or more of the unique identifier(s) to the RADIUS. The RADIUS will return a destination IP address (which, for example, enables access to a server or an application hosted on a corporate intranet which is registered to the user of the handset that corresponds to the unique identifier(s) to the service node 70. In the event that the RADIUS does not match the unique identifier(s) against records held by the RADIUS or that the mobile terminal has not been configured to forward any unique identifier data then the service node shall prompt the user to identify themselves using a unique PIN (which may be solely numeric or alphanumeric). The WAP gateway allows the unique PIN to pass to the service node 70, which in turn passes the PIN to the RADIUS. The RADIUS will return to the service node the destination IP address which is registered to the user of the handset that corresponds to the unique PIN identifier. In the event that the RADIUS does not match the PIN against records held by the RADIUS then the communication service will be terminated.

The service node, on receipt of a registered IP address from the RADIUS, may provide either a direct link to the registered IP address or alternatively index a database to determine a number of user and/or group options that correspond to the IP address, for example access to data files which are specific to the marketing group, access to a corporate intranet, access to an individual email account or timesheet facility, etc. These options are then returned to the mobile telephone, via the WAP gateway, in the form of a menu from which one or more choices may be selected. The user's selection is then transmitted to the service node, via the WAP gateway, which then communicates with the network or application 80a, 80b, 80c associated with the selection, with the service node acting as a proxy server for the mobile telephone. The service node uses the registered IP address associated with the telephone to initiate communication with the network or application 80a, 80b, 80c (as requests which are not made from an authorised address space may be rejected in the interests of security for example by a firewall blocking the packets). The user may be promoted to enter a PIN or further password before being granted access to the selected network or application.

The present invention provides secure access to private networks (or applications hosted on private networks) based upon the unique identifiers associated with the terminal and/or the user that connects to the WAP gateway, so that a relatively high degree of security can be maintained without causing too much inconvenience to the user. The invention also enables the mobile telephone to communicate with hosts without the user or their terminal knowing the registered IP address.

In the event that a user loses their telephone (or it is stolen) then the need to provide a PIN (or password) to access specific networks or applications should provide some protection against unauthorised access to these systems. The use of hardware specific parameters to act as unique telephone identifiers should reduce the possibility of an authorised user having their details 'spoofed' by an unauthorised individual. In order to reduce the possibility of a hacker intercepting the unique identifiers when they are being transmitted, the transmitted data is protected over the radio link by WTLS (Wireless Transport Layer Security) as well as any encryption that is provided by the radio bearer (for example the A5 encryption algorithm which is used by GSM systems). Once the data is being transmitted over the fixed network the SSL (Secure Sockets Layer) protocol is used to protect the data.

It should be understood that although the above discussion has focused on the use of mobile telephones it should be understood that PDAs (Personal Digital Assistants) and other devices which have WML-based browsers and WAP capabilities, for example through add-on 2G (second generation) modems, such as GSM or D-AMPS, may use the same method to gain secure access to private networks. Access from WAP mobile terminals that have 2.5G (for example GPRS or D-AMPS+) or 3G (for example UMTS or CDMA 2000) radio bearer systems will establish a communication session directly with the WAP gateway.

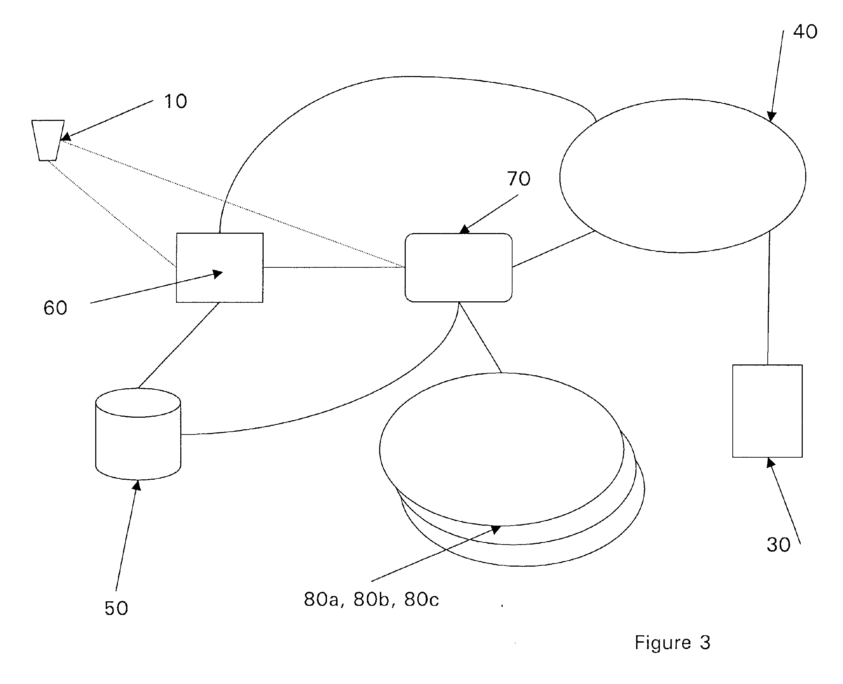

Figure 3 shows a schematic depiction of a network which incorporates a second embodiment of the present invention. The network depicted in Figure 3 is similar to that depicted in Figure 2 but the WAP gateway 20 has been removed. In this case, the mobile terminal has a microbrowser that is capable of decoding cHTML (Compact HTML) encoded content, such as the Universal Edition of OpenWave Mobile Browser (i.e. a mobile telephone or terminal that is compatible with the Japanese imode system), or alternatively the terminal has sufficient processing power to run a browser capable of rendering HTML encoded content, for example Microsoft Pocket Internet Explorer or Handspring Blazer.

As the terminal is capable of interpreting HTML content, and transmitting that content via HTTP using the standard suite of internetworking protocols, there is no need for a gateway to perform any translations. Thus the mobile terminal connects to the network access server 60 , for example by dialling the telephone number associated with the NAS. The NAS initiates the CHAP procedure, with the username and password data held by the terminal 10 being sent to the RADIUS 50 for verification. If the RADIUS returns a positive result then the NAS assigns an IP address to the mobile terminal. The mobile terminal then initiates a communication session with the service node 70 using the IP address of the service node and passes one or more identifiers unique to the terminal to the service node.

The service node the uses one or more of these identifiers to index the RADIUS 50, and if a successful match occurs then the RADIUS will return a destination IP address which is registered to the user of the handset that corresponds to the unique identifier(s) to the service node 70. As described above in relation to Figure 2, these identifiers are unique to the mobile terminal hardware, for example the IMEI, or to the SIM card that is held by the terminal, for example the MSISDN or the IMSI.

In the event that the RADIUS does not match the unique identifier(s) against records held by the RADIUS or that the mobile terminal has not been configured to forward any unique identifier data then the service node shall prompt the user to identify themselves using a unique PIN (which may be solely numeric or alphanumeric). The WAP gateway allows the unique PIN to pass to the service node 70, which in turn passes the PIN to the RADIUS. The RADIUS will return to the service node the destination IP address which is registered to the user of the handset that corresponds to the unique PIN identifier. In the event that the RADIUS does not match the PIN against records held by the RADIUS then the communication service will be terminated.

The service node on receipt of a registered IP address from the RADIUS, may provide a direct link to the registered IP address, or alternatively, index a database to determine a number of user and/or group options that correspond to the IP address, for example access to data files which are specific to the marketing group, access to a corporate intranet, access to an individual email account or timesheet facility, etc.

These options are then returned to the mobile terminal in the form of a menu from which one or more choices may be selected. The user's selection(s) are then transmitted to the service node which then communicates with the network or application 80a, 80b, 80c associated with the selection. The service node uses the registered IP address from the RADIUS to initiate communication with the network or application 80a, 80b, 80c rather than the IP address associated with the terminal (as requests which are not made from an authorised address space may be rejected in the interests of security for example by a firewall blocking the packets). The user may be promoted to enter a PIN or further password before being granted access to the selected network or application.

Whilst being transmitted over the radio link the terminal identifiers will be kept secure by the encryption provided by the radio bearer system. In addition, it is possible to provide protection at the application level, using, for example SSL or IPSec (IP Security Protocol), if the mobile terminal has sufficient processing power (and other hardware capabilities as required). In any case, communication sessions from the service node to the RADIUS, the public internet or the private networks can be protected using SSL, IPSec or other techniques.

In the event that the mobile terminal uses a more advanced radio bearer system (such as, for example, a 2.5G or 3G system) then the mobile terminal will access the service node by initiating a communication session using the IP address of the service node. The unique terminal identifiers will be transmitted directly to the service node for authentication by the RADIUS.

## Claims

1. A method of providing network access to a mobile terminal, the method comprising the steps of;
(a) receiving one or more terminal unique identifiers from the mobile terminal at an authentication server,
(b) searching a terminal unique identifier database held by the authentication server for the received terminal identifiers;
(c) transmitting a network address to a service node if the search performed in step (b) indicates a match; and
(d) providing access from the mobile terminal to a network via the service node using the network address transmitted to the service node.

2. A method according to claim 1, wherein the terminal unique identifiers are received at the authentication server from the mobile terminal via the service node.

3. A method according to claim 1 or claim 2, wherein the service node communicates with the mobile terminal via a WAP gateway.

4. A method according to any of claims 1 to 3, wherein the terminal is a mobile telephone.

5. A method according to any of claims 1 to 4, wherein the one or more terminal unique identifiers received by the authentication server are unique to the mobile terminal data carrier.

6. A method according to claim 5, wherein the wherein the one or more terminal unique identifiers received by the authentication server are unique to the subscriber identity module (SIM) card held by the terminal.

7. A method according to any of claim 1 to claim 4, wherein the one or more unique terminal identifiers received by the authentication server are unique to the terminal hardware.

8. A method according to any of claim 1 to claim 7, wherein the network address transmitted to the service node is associated with the one or more terminal identifiers sent to the authentication server.

9. A method according to any of claim 1 to claim 8, wherein the network address transmitted to the service node is chosen from a defined range of network addresses.

10. A communications network comprising an authentication server and a service node, the authentication server configured, in use, to
(i) receive data from a mobile terminal, said data comprising terminal-unique identifiers;
(ii) search a database of terminal unique identifiers; and
(iii) cause a network address to be transmitted to a service node if the search performed in (iii) indicates a match,
the service node, in use, establishing a communication session between said mobile terminal and a further communications network via the service node using the network address transmitted to the service node.

11. A communications network according to claim 10, in which the authentication server is in communication with the service node such that, in use, the terminal unique identifiers are communicated to the authentication server from the mobile terminal via the service node.

12. A communications node according to claim 10 or 11, further comprising a WAP gateway which is in communication with the service node such that, in use, the mobile terminal communicates with the service node via the gateway.
